# EUROPÄISCHE PATENTANMELDUNG

(11) **EP 1 035 361 A1**
(43) Veröffentlichungstag der Anmeldung: **13.09.2000**
(21) Anmeldenummer: 99810203.2
(22) Anmeldetag: 08.03.1999
(51) Int. Cl.: F16K 17/08

(54) **Auslöseventil**

(71) Anmelder: ABB ALSTOM POWER (Schweiz) AG, 5401 Baden (CH)
(72) Erfinder: Frey, Heinz, 5737 Menziken (CH); Prochazka, Kamil, 5210 Windisch (CH)
(74) Vertreter: Pöpper, Evamaria, Dr.

(57) **Zusammenfassung**

Die Erfindung bezieht sich auf ein Auslöseventil (1), welches zur Absteuerung eines hydraulischen Sicherheitssystems höheren Drucks mittels eines Niedrigdrucksystems dient. Das Auslöseventi (1) weist in einem Ventilgehäuse (2) einen Resetkolben (3) auf, an welchem über eine Feder (3) eine Platte (4) angebracht ist. Auf der dem Resetkolben (3) abgewandten Seite der Platte (4) ist über eine weitere Feder (7) eine zusätzliche Platte (6) angeordnet. Die zusätzliche Platte (6) dient in geschlossenen Zustand des Auslöseventils (1) zur Abdichtung des Einlaufs (8) des hydraulischen Sicherheitssystems. Wird das Auslöseventil (1) über eine Druckabsenkung in einem Raum (10) ausgelöst, wird der Einlauf (8) mit einem Auslauf (9) verbunden und das hydraulische Sicherheitssystem wird abgesteuert.

## Beschreibung

### TECHNISCHES GEBIET

Bei der Erfindung handelt es sich um ein hydraulisches Auslöseventil zur Auslösung eines Sicherheitssystems.

### STAND DER TECHNIK

Zur Steuerung eines Sicherheitssystems ist ein Auslöseventil bekannt, welches das Signal eines primären Niederdrucksystems mit einem sekundären Sicherheitssystem höheren Drucks koppelt. Das Auslöseventil besteht aus einem Resetkolben, an welchem über eine Feder eine Platte befestigt ist. Auf der der Feder abgewandten Seite ist an der Platte ein Schieberventil befestigt. Die Lage der Platte bestimmt über das Schieberventil, ob das sekundäre Sicherheitssystem geöffnet ist und somit der Druck in einem hydraulischen System gehalten wird und ein ungehinderter Fluss innerhalb dieses hydraulischen Systems stattfinden kann. Um das Auslöseventil auszulösen wird der Druck im Raum vor der Platte über eine Leitung gesenkt. Dadurch bewegt sich die Platte und mit ihr das Schieberventil nach vorne und das hydraulische Sicherheitsventil wird von dem Einlauf getrennt. In dieser Stellung wird der Druck im Sicherheitsystem über einen Ablauf abgelassen. Vor der Platte kann sich nun kein Druck aufbauen, da es einen Fluss gibt von der Leitung, welche mit dem Raum vor der Platte verbunden ist, zu einem Ablauf, welcher mit dem Federraum zwischen Resetkolben und Platte verbunden ist. Das Auslöseventil wird durch den Resetkolben wieder geschlossen. Durch eine Druckerhöhung am hinteren Ende des Resetkolbens bewegt er sich nach vorne und der erwähnte Fluss zum Ablauf aus dem Federraum wird unterbrochen. Erst dadurch kann sich wieder ein Druck im Raum vor der Platte aufbauen und die Platte wird mit dem Schieberventil nach hinten verschoben. Dadurch wird das hydraulische Sicherheitsventil von dem Ablauf getrennt und wieder mit dem Einlauf verbunden.

Nachteil dieses Auslöseventils ist aber das Schieberventil, welches über eine grosse Fläche in direktem Kontakt mit dem Gehäuse steht. Das Schieberventil wirkt im nicht ausgelösten Zustand wie ein Filter, da es immer einen kleinen Fluss zu dem Ablauf des hydraulischen Sicherheitssystems gibt und zudem die Zeitspanne, in welcher das Ventil nicht ausgelöst wird, im Verhältnis mit dem ausgelösten Zustand relativ gross ist. Durch Verunreinigungen kann es im Spalt zwischen dem Gehäuse und dem Schieber zu Blockierungen kommen, wodurch die sichere Auslösung des Auslöseventils nicht mehr gewährleistet ist oder zumindest stark behindert werden kann.

### DARSTELLUNG DER ERFINDUNG

Ziel der Erfindung ist es daher, ein Auslöseventil zu schaffen, welches diese Nachteile überwindet und keine Gefahr des Ausfalls des Ventils durch Verschmutzungen besteht.
Erfindungsgemäss wird dies bei einem Auslöseventil nach dem Oberbegriff des Patentanspruchs 1 dadurch erreicht, dass auf der dem Resetkolben abgewandten Seite der Platte eine zusätzliche Platte angeordnet ist, so dass sich der Raum zwischen der Platte und der zusätzlichen Platte befindet und die zusätzliche Platte den mindestens einen Einlauf vom Ablauf im geschlossenen Zustand des Auslöseventils trennt.

Vorteilhaft wird die Gefahr des Auslöseventils verhindert, durch Verschmutzungen zu blockieren oder hängenzubleiben, da es keine Führungsflächen eines Schieberventils gibt. Zudem kann die zusätzliche Platte an verschiedene Drücke des primären Niederdrucksystems und des sekundären Hochdrucksystems flexibler angepasst werden. Da keine notwendige mechanische Verbindung zwischen den beiden Platten besteht, gibt es vorteilhaft weniger Reibungsverluste des Auslöseventils.

Die weiteren Ausführungsformen ist Gegenstand des abhängigen Anspruches.

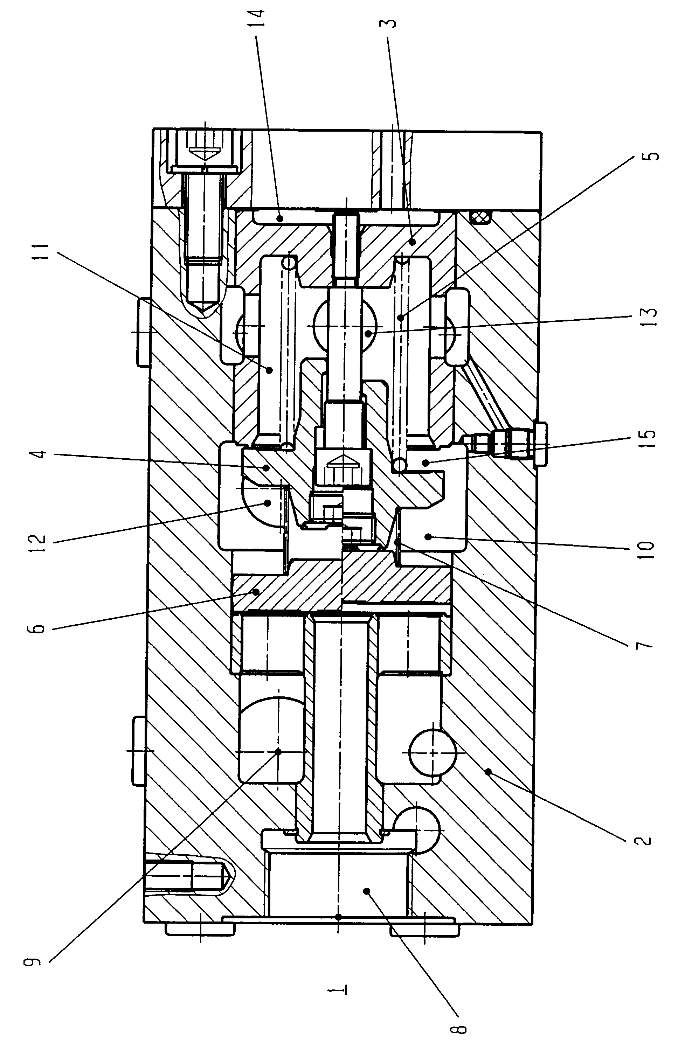

### KURZE BESCHREIBUNG DER ZEICHNUNG

Die einzige Figur zeigt eine Ausführungsform eines erfindungsgemässen Auslöseventils mit der Anordnung einer zusätzlichen Platte.

Es werden nur die für die Erfindung wesentlichen Elemente dargestellt.

### WEG ZUR AUSFÜHRUNG DER ERFINDUNG

Die einzige Figur zeigt eine Ausführungsform eines erfindungsgemässen Auslöseventils 1, welches geeignet ist, ein sekundäres Sicherheitssystem höheren Drucks durch ein primäres Niederdrucksystem hydraulisch abzusteuern. Dieses Auslöseventil 1 wird beispielsweise in einem Kraftwerk zur Speisung eines hydraulischen Systems eingesetzt. Das Auslöseventil 1 besteht aus einem Ventilgehäuse 2, in welchem ein Resetkolben 3 und eine Platte 4, welche mit dem Resetkolben 3 über eine Feder 5 in einem Federraum 11 verbunden ist, angeordnet sind. Auf der dem Resetkolben 3 abgewandten Seite der Platte 4 ist gegenüber dem Stand der Technik eine zusätzliche Platte 6 angeordnet. Die zusätzliche Platte 6 ist mit einer Feder 7 in einem Raum 10 mit der Platte 4 verbunden. Diese Feder 7 im Raum 10 dient zur besseren Führung der zusätzlichen Platte 6 in dem Ventilgehäuse 2, sie ist aber nicht zwingend notwendig. Am anderen Ende des Ventilgehäuses 2, welches dem Resetkolben 3 abgewandt ist, ist der Einlauf 8 des hydraulischen Sicherheitssystems. Die zusätzliche Platte 6 grenzt in geschlossener Stellung an den Einlauf 8 und trennt ihn vom einem Ablauf 9. Das hydraulische Sicherheitssystem wird abgesteuert, indem der Druck in dem Raum 10 über eine Speisung 12 abgesenkt wird. Diese Druckabsenkung hat zur Folge, dass sowohl die Platte 4 als auch die zusätzliche Platte 6 sich in Richtung des Raums 10 bewegen, da an der Platte 4 die Kraft der vorgespannten Feder 5 und an der zusätzlichen Platte 6 der Druck des hydraulischen Sicherheitssystems wirkt. Durch die Bewegung der zusätzlichen Platte 6 wird der Einlauf 8 des hydraulischen Sicherheitssystems freigegeben und mit dem Ablauf 9 verbunden. Dies hat einen starken Druckabfall im Sicherheitssystems zur Folge und es wird abgesteuert. Durch die Bewegung der Platte 4 entsteht ein Spalt 15 zwischen der Platte 4 und dem Resetkolben 3. Hierdurch entsteht ein Fluss von der Speisung 12 durch diesen Spalt 15 zu einem Ablauf 13, welcher in dem Federraum 11 vorhanden ist. Durch eine Druckerhöhung auf das hintere Ende des Resetkolbens 3 wird dieser in die Richtung der Platte 4 bewegt. Der erwähnte Spalt 15 zwischen dem Resetkolben 3 und der Platte 4 verschwindet, und damit auch der Fluss durch diesen Spalt 15. Damit kann sich im Raum 10 wieder ein Druck aufbauen, welcher die zusätzliche Platte 6 wieder gegen den Einlauf 8 drückt. So ist das Auslöseventil 1 wieder geschlossen und das hydraulische Sicherheitssystem ist wieder aktiviert. Die Platte 4 wird mit dem Resetkolben 3 in Richtung des Raumes 14 am Ende des Resetkolbens 3 geschoben, nachdem der Druck im Raum 14 wieder erniedrigt worden ist. In der einzigen Figur wird das Auslöseventil 1 zweigeteilt. In der oberen Hälfte ist es in geschlossener Stellung dargestellt. In der unteren Hälfte ist das Auslöseventil 1 geöffnet und das Sicherheitssystem abgesteuert.

Da bei dem so konstruierten Auslöseventil 1 die zusätzliche Platte 6 für die Abdichtung des Einlaufs 8 des hydraulischen Sicherheitssystems verantwortlich ist, gibt es vorteilhaft keine grosse Reibungsflächen, an denen sich Verschmutzungen ansammeln können und die sichere Auslösung des Auslöseventils 1 behindern könnten. Vorteilhaft kann die zusätzliche Platte 6 den Druckverhältnissen des hydraulischen Sicherheitssystems höheren Drucks und des primären Niederdrucksystems flexibel angepasst werden. Da keine notwendige mechanische Verbindung zwischen der Platte 4 und der zusätzlichen Platte 6 existiert und die Feder 7 lediglich zur besseren Führung dient, entstehen auch keine auf die Absteuerung schädlich wirkenden Reibungsverluste.

### BEZUGSZEICHEN

- **1**: Auslöseventil
- **2**: Ventilgehäuse
- **3**: Resetkolben
- **4**: Platte
- **5**: Feder für Platte 4
- **6**: Zusätzliche Platte
- **7**: Feder für zusätzliche Platte 6
- **8**: Einlauf Sicherheitssystem
- **9**: Ablauf Sicherheitsystem
- **10**: Raum zwischen Platte 4 und Platte 6
- **11**: Federraum
- **12**: Speisung Raum 10
- **13**: Ablauf Federraum
- **14**: Raum hinter Resetkolben 3
- **15**: Spalt

## Patentansprüche

1. Auslöseventil (1) zur Absteuerung eines hydraulischen Sicherheitssystems mit mindestens einem Einlauf (8) und einem Ablauf (9), im wesentlichen bestehend aus einem in einem Ventilgehäuse (2) angeordneten Resetkolben (3), an welchem mit einer Feder (5) eine Platte (4) befestigt ist, und einem Raum (10), welcher sich auf der Seite der Platte (4) befindet, welche dem Resetkolben (3) abgewandt ist,
dadurch gekennzeichnet, dass
auf der dem Resetkolben (3) abgewandten Seite der Platte (4) eine zusätzliche Platte (6) angeordnet ist, so dass sich der Raum (10) zwischen der Platte (4) und der zusätzlichen Platte (6) befindet und die zusätzliche Platte (6) den mindestens einen Einlauf (8) vom Ablauf (9) im geschlossenen Zustand des Auslöseventils (1) trennt.

2. Auslöseventil (1) nach Anspruch 1,
dadurch gekennzeichnet, dass
die zusätzliche Platte (7) mit einer Feder (8) mit der Platte (4) verbunden ist.
